# EUROPÄISCHE PATENTANMELDUNG

(11) **EP 4 520 479 A1**
(43) Veröffentlichungstag der Anmeldung: **12.03.2025**
(21) Anmeldenummer: 24188132.5
(22) Anmeldetag: 11.07.2024
(51) Int. Cl.: B25B 11/00, B23Q 3/08

(54) **VAKUUMSPANNPLATTE MIT MIT LUFTSTROMBEGRENZUNGSVENTILEN**

(30) Priorität: 05.09.2023 DE 102023123857
(71) Anmelder: Wissner, Kirsten, 14469 Potsdam (DE)
(72) Erfinder: Wissner, Kirsten, 14469 Potsdam (DE)
(74) Vertreter: REHBERG HÜPPE + PARTNER

(57) **Zusammenfassung**

Eine Vakuumspannplatte (1) weist eine Platte (2) auf, in der mehrere nebeneinander angeordnete Absaugbereichen (3) jeweils derart ausgebildet sind, dass ein auf einer Innenseite (4) der Platte (2) ausgebildetes partielles Vakuum (6) in der Lage ist, Luft (7) von einer Außenseite (8) der Platte (2) anzusaugen, wobei sich in dem jeweiligen Absaugbereich (3) ein Luftstrom durch die Platte (2) ausbildet. In mindestens einem der Absaugbereiche (3) ist ein Luftstrombegrenzungsventil (14) zur Begrenzung des Luftstroms angeordnet. Das Luftstrombegrenzungsventil (14) weist einen Ventilkörper (15) auf, der von einer Rückstellkraft in eine Offenstellung beaufschlagt wird und der derart ausgebildet und angeordnet ist, dass er durch eine über ihm abfallende Druckdifferenz in eine Geschlossenstellung überführt wird. Diese Druckdifferenz resultiert aus dem Luftstrom, soweit dieser nicht durch Abdecken des Absaugbereichs (3) an der Außenseite (8) der Platte (2) behindert ist. Dabei blockiert der Ventilkörper (15) einen Luftdurchtrittsquerschnitt des Absaugbereichs (3), den er in seiner Offenstellung belässt, in seiner Geschlossenstellung teilweise, jedoch nicht vollständig, damit der Ventilkörper (15) bei nachträglicher Abdeckung des Absaugbereichs (3) in seine Offenstellung zurückkehrt.

## Beschreibung

### TECHNISCHES GEBIET DER ERFINDUNG

Die Erfindung betrifft eine Vakuumspannplatte mit nebeneinander angeordneten Absaugbereichen und mit einem Luftstrombegrenzungsventil in mindestens einem der Absaugbereiche sowie den weiteren Merkmalen des Oberbegriffs des unabhängigen Patentanspruchs 1.

Vakuumspannplatten dienen dazu, Werkstücke durch Ausbildung von Unterdruck an ihrer Unterseite auf eine starre Platte zu spannen. Zur Ausbildung dieses Unterdrucks wird bei einer Vakuumspannplatte mit nebeneinander angeordneten Absaugbereichen Luft durch die Absaugbereiche abgesaugt. Wenn dabei die Absaugbereiche durch das Werkstück abgedeckt sind, bildet sich in jedem der Absaugbereiche an der Unterseite des Werkstücks der gewünschte Unterdruck aus. Wenn jedoch einer oder mehrere der Absaugbereiche nicht durch das Werkstück abgedeckt sind, wird durch die nicht abgedeckten Absaugbereiche eine Luftströmung hervorgerufen, die das Ausbilden des Unterdrucks in den anderen Absaugbereichen behindert. Wenn viele der Absaugbereiche nicht abgedeckt sind, kann der Unterdruck in den abgedeckten Absaugbereichen so klein werden, dass er für das Spannen des jeweiligen Werkstücks nicht mehr ausreicht. Besonders problematisch ist die Situation dann, wenn durch das Bearbeiten des jeweiligen Werkstücks immer mehr der Absaugbereiche ihre Abdeckung verlieren, beispielsweise indem aus einem plattenförmigen Werkstück eine Vielzahl von kleinteiligen Objekten heraus gefräst wird. Dabei geht die Überdeckung von Absaugbereichen nicht erst durch das Entfernen der herausgefrästen kleinteiligen Objekte verloren, sondern auch schon dann, wenn sich ein Fräskanal über die Absaugbereiche hinweg erstreckt.

### STAND DER TECHNIK

Aus der DE 37 34 945 A1 ist eine Spannplatte zur Aufnahme von zu gravierenden Platten bekannt, die eine Aufnahmefläche und mindestens einen nach oben offenen Kanal in der Aufnahmefläche aufweist, welcher an eine Unterdruckquelle anschließbar ist. Der Kanal verläuft in einem durchgehenden Streckenzug in der Aufnahmefläche der Spannplatte. Der Streckenzug ist im Sinne wachsender Formate einerseits aus Streckenabschnitten parallel zur Längs- und Querseite und andererseits aus Verbindungsabschnitten parallel zur anderen Längs- und Querseite der Spannplatte zusammengesetzt. Der Kanal weist einen derart geringen Querschnitt auf, dass die Platten dichtungslos auf die Aufnahmefläche auflegbar sind und über den Unterdruck gehalten werden. Diese bekannte Spannplatte ist nicht für das Halten von plattenförmigen Werkstücken geeignet, aus denen Objekte herausgefräst werden, weil dadurch der Kanal freigelegt werden kann, so dass er in allen von der Unterdruckquelle weiter weg liegenden Streckenabschnitten für das Halten der plattenförmigen Werkstücke wirkungslos wird.

Aus der US 4 946 149 A ist eine Vakuumspannplatte mit einer Platte bekannt, in der Anschläge und Vakuumspannelemente vertikal verschieblich gelagert sind. Ein Bereich, über den ein Werkstück auf der Platte horizontal verschieblich ist, kann durch selektives Herausfahren einzelner Anschläge bis über die Auflagefläche der Platte begrenzt werden. Die Vakuumspannelemente werden einzeln aktiviert, indem sie von unten aktiv bis an die Auflagefläche herangefahren und dabei mit einer Unterdruckquelle verbunden werden. Die selektive Aktivierung der Vakuumspannelemente, die sich zunächst unterhalb des jeweiligen Werkstücks befinden, ist aufwändig. Wenn ein Fräskanal über eines der der aktivierten Vakuumspannelemente verläuft, besteht die Gefahr, dass der mit der Unterdruckquelle aufgebrachte Unterdruck im Bereich aller Vakuumspannelemente zusammenbricht. Zudem sind die einzelnen Vakuumspannelemente von relativ großem Durchmesser in einem relativ groben Raster angeordnet, so dass sie ungeeignet sind, Werkstücke beliebiger Abmessungen und insbesondere kleinteilige Objekte zu spannen, die an einer der Vielzahl von Positionen aus Werkstücken herausgefräst werden.

Aus der DE 40 30 113 C2 ist eine Vorrichtung zum Spannen von zu bearbeitenden Platten mit einer durchgehende Bohrungen aufweisenden, ebenen Grundplatte und einer auf der der jeweiligen zu bearbeitenden Platte zugekehrten Oberseite der Grundplatte angeordneten begrenzt luftdurchlässigen Schicht bekannt. Die Bohrungen sind an der der Platte abgekehrten Unterseite der Grundplatte an eine Vakuumpumpe angeschlossen. Beim Halten der jeweiligen Platte ist die begrenzt luftdurchlässige Schicht zwischen der Grundplatte und der Platte angeordnet. Die Bohrungen in der Grundplatte weisen einen Durchmesser von 0,1 bis 1 mm auf, so dass Platten beliebigen Umrisses auf der luftdurchlässigen Schicht abdichtungslos gehalten werden. Die Durchtritte der Bohrungen auf der Oberseite der Grundplatte sind in einem vergleichsweise kleinen Raster der Größe von etwa 20 mm angeordnet. Die kleindimensionierten Bohrungen erlauben es, in Verbindung mit der sie abdeckenden, begrenzt luftdurchlässigen Schicht, unterhalb der Grundplatte auch dann einen beträchtlichen Unterdruck aufrecht zu erhalten, wenn einige der Bohrungen nicht zusätzlich von den zu bearbeitenden Platten abgedeckt sind. Dies gilt jedoch nicht dann, wenn viele der Bohrungen von vorn herein nicht abgedeckt sind oder durch das Bearbeiten der Platten freigelegt werden. Die begrenzt luftdurchlässige Schicht kann ein auf die Oberseite der Grundplatte aufgelegtes, austauschbares Verschleißmaterial sein. Konkret wird hierfür Filterpapier vorgeschlagen. Das Filterpapier kann mit einem Adhäsionsmittel vorbehandelt sein, durch das der Reibungskoeffizient sowohl zwischen den zu bearbeitenden Platten und dem Filterpapier als auch der Grundplatte und dem Filterpapier erhöht wird. Auf der Unterseite der Grundplatte grenzen die Bohrungen an einen durchgehenden Kanal an, der an einer Stelle an die Vakuumpumpe angeschlossen ist und mit fortschreitender Entfernung von der Stelle an solche Bohrungen angrenzt, die geschlossenen Flächen aufsteigender Größe auf der Oberseite der Grundplatte entsprechen. Bei einer großen Grundplatte sind mehrere Kanäle vorgesehen, die unabhängig voneinander an eine Vakuumpumpe anschließbar sind, wobei die einem Kanal entsprechende Fläche auf der Oberseite der Grundplatte rechteckige Abmessungen aufweist. Bei der Verwendung der bekannten Vorrichtung werden nur solche Kanäle an die Grundplatte angeschlossen, oberhalb derer sich eine zu bearbeitende Platte erstreckt. Hierfür ist eine Auswahl der anzuschließenden Kanäle zu treffen. Das Einbringen der Bohrungen mit dem kleinen Durchmesser, der vorzugsweise zwischen 0,2 und 0,8 mm beträgt, in dem vergleichsweise kleinen Raster von 20 mm in die Grundplatte, die eine typische Dicke von ein paar Zentimetern aufweist, ist bei einer großflächigen Grundplatte sehr aufwändig.

Aus der DE 10 2009 045 536 B4 ist ein Verfahren zum spanabnehmenden Bearbeiten von eine plane Unterseite aufweisenden Werkstücken auf einer Werkzeugmaschine bekannt, bei dem zwischen der planen Unterseite und des jeweiligen Werkstücks und einer Vakuumspannplatte der Werkzeugmaschine mit Luftdrosselfunktion ein Bogen aus einem in seiner Haupterstreckungsebene luftdichten Bahnenmaterial angeordnet wird. Durch die Vakuumspannplatte wird Luft abgesaugt, um das Werkstück zu spannen. Das gespannte Werkstück wird mit mindestens einem spanabnehmenden Werkzeug der Werkzeugmaschine bearbeitet, und anschließend wird das bearbeitete Werkstück wieder freigegeben. Für die Vakuumspannplatte wird eine formstabile Faserplatte verwendet, die die Oberseite der Vakuumspannplatte ausbildet. Die Faserplatte wird an der Oberseite der Vakuumspannplatte geglättet, insbesondere mit einem rotierenden Werkzeug der Werkzeugmaschine selbst feingeschliffen oder poliert. Das in der auf der Streckungsebene luftdichte Bahnenmaterial kann eine Kautschukfolie, eine Kunststofffolie oder ein imprägniertes Papier sein. Aus dem Bogen des Bahnenmaterials werden Löcher ausgestanzt. Durch dieses Verfahren wird eine kostengünstige Vakuumspannplatte bereitgestellt.

Eine Vorrichtung zum Aufspannen von Werkstücken mittels Unterdruck, die die Merkmale des Oberbegriffs des unabhängigen Patentanspruchs 1 aufweist, ist aus der DE 40 00 099 A1 bekannt. Die Vorrichtung weist eine Spannplatte auf, die mit einer Vielzahl von durchgehenden Ansaugausnehmungen versehen ist. An der Unterseite der Spannplatte sind die Ansaugausnehmungen mit einem Unterdruckerzeuger verbindbar. In jeder Ansaugausnehmung in der Spannplatte ist ein Dichtelement derart angeordnet, dass die vom aufzuspannenden Werkstück im Wesentlichen vollständig überdeckten Ansaugausnehmungen geöffnet und die restlichen Ansaugausnehmungen in der Spannplatte von den betreffenden Dichtelementen bei Unterdruck verschlossen sind. Das jeweilige Dichtelement hält im Ruhezustand die Ansaugausnehmung in der Spannplatte offen und schließt die Ansaugausnehmung bei aufgelegtem Werkstück und Beaufschlagen mittels Unterdruck. Die Ansaugausnehmung ist gegenüber der Spannfläche der Spannplatte versenkt, und das Dichtelement verschließt die Ansaugausnehmung von der Oberseite her. Dabei wird das Dichtelement durch Federmittel in seinen Ruhezustand gedrängt, deren Kraft geringer als der mindestens aufzubringende Unterdruck ist. Das Dichtelement kann durch ein auf und ab bewegbares kolbenähnliches Bauteil gebildet sein oder durch ein elastisch federndes, einendig eingespanntes scheibenförmiges Bauteil. Bei der bekannten Vorrichtung kehrt das Dichtelement nur dann in seinen Ruhezustand zurück, wenn der Unterdruck auf der Unterseite der Spannplatte zurückgeht. Dies hat beim Aufspannen großflächiger dünnwandiger Werkstücke, die nicht von vorn herein komplett eben sind und die daher nicht von vorn herein vollflächig auf der Spannplatte aufliegen, so dass sie einen Teil der unter ihnen liegenden Ansaugausnehmungen in der Spannplatte nicht schließend überdecken, schwerwiegende Folgen. Die von den Werkstücken nicht schließend überdeckten Ansaugausnehmungen werden beim Beaufschlagen der Unterseite der Spannplatte mittels Unterdruck stark von Luft durchströmt und daher durch die darin angeordneten Dichtelemente dauerhaft verschlossen. Somit stehen diese Ansaugausnehmungen für das Aufspannen der Werkstücke mittels Unterdruck nicht mehr zur Verfügung.

Aus der DE 10 2011 076 483 A1 ist eine Dichtungsplatte für einen Blocksauger zum Fixieren von Werkstücken auf einem Fixierbalken oder Fixiertisch unter Anwendung von Unterdruck bekannt. Die Dichtungsplatte ist auf eine Anlagefläche des Blocksaugers aufgespannt und weist an ihrem Umfang eine Dichtlippe auf. Die Dichtungsplatte ist mit einer Membran versehen, und die Membran erlaubt ein Durchströmen von Luft. Dazu weist die Membran Öffnungen auf. Die Luft wird durch die Öffnungen abgesaugt und die Membran weist die Funktion eines Filters auf. Die Achse der Öffnungen verläuft orthogonal zur Oberfläche der Dichtungsplatte.

Aus der WO 2022/ 223 453 A1 ist eine Vorrichtung zum Messerschneiden oder Sägen von Werkstücken bekannt, die eine Schneideinheit oder eine Sägeeinheit und eine Auflagefläche zur Auflage des jeweiligen Werkstücks aufweist. Die Auflagefläche weist eine Vielzahl von Durchgangsöffnungen auf. Unterhalb der Auflagefläche ist eine Kammer ausgebildet, die mit einer Einheit zur Erzeugung eines Unterdrucks derart strömungstechnisch in Verbindung steht, dass in einem Betriebszustand ein Volumenstrom entlang einer Strömungsrichtung durch die Durchgangsöffnungen und die Kammer gefördert wird. Um eine hohe Haltekraft auf das zu bearbeitende Werkstück auszuüben und gleichzeitig die Geräuschbelästigung zu reduzieren, ist stromauf der Kammer ein Abschnitt vorgesehen, in welchem die Durchtrittsquerschnittsfläche für den Volumenstrom in Strömungsrichtung betrachtet abnimmt. Dieser Abschnitt weist eine stromab der Auflagefläche angeordnete Schicht aus porösem Material auf, die Durchgangsöffnungen mit Querschnittsflächen aufweist, die kleiner als die Querschnittsflächen der Durchgangsöffnungen der Auflagefläche.

### AUFGABE DER ERFINDUNG

Der Erfindung liegt die Aufgabe zugrunde, eine Vakuumspannplatte aufzuzeigen, die ohne besondere Anpassungsmaßnahmen für das Spannen von Werkstücken beliebiger Abmessungen, das Herausarbeiten kleinteiliger Objekte aus plattenförmigem Material an beliebigen Positionen sowie auch für das Spannen von großflächigen dünnwandigen Werkstücken, die nicht von vorn herein komplett eben sind, besonders gut geeignet ist.

### LÖSUNG

Die Aufgabe der Erfindung wird durch eine Vakuumspannplatte mit den Merkmalen des Patentanspruchs 1 gelöst. Die abhängigen Patentansprüche sind auf bevorzugter Ausführungsform der erfindungsgemäßen Vakuumspannplatte gerichtet.

### BESCHREIBUNG DER ERFINDUNG

Eine erfindungsgemäße Vakuumspannplatte weist eine Platte mit mehreren nebeneinander angeordneten Absaugbereichen auf. Die Absaugbereiche sind jeweils derart ausgebildet, dass ein auf einer Innenseite der Platte ausgebildetes partielles Vakuum in der Lage ist, Luft von einer Außenseite der Platte anzusaugen, wobei sich in dem jeweiligen Absaugbereich ein Luftstrom durch die Platte ausbildet. In mindestens einem der Absaugbereiche, vorzugsweise in mehreren der Absaugbereiche und am meisten bevorzugt in jedem der Absaugbereiche ist ein Luftstrombegrenzungsventil zur Begrenzung des Luftstroms angeordnet. Das Luftstrombegrenzungsventil weist einen Ventilkörper auf, der von einer Rückstellkraft in eine Offenstellung beaufschlagt wird und der derart ausgebildet und angeordnet ist, dass er durch eine über ihm abfallende Druckdifferenz in eine Geschlossenstellung überführt wird, und zwar durch die Druckdifferenz, die dann aus dem Luftstrom resultiert, wenn dieser nicht durch Abdecken des Absaugbereichs an der Außenseite der Platte behindert ist. Dabei blockiert der Ventilkörper einen Luftdurchtrittsquerschnitt des Absaugbereichs, den er in seiner Offenstellung belässt, in seiner Geschlossenstellung teilweise, jedoch nicht vollständig. Vielmehr ist ein in der Geschlossenstellung verbleibender Luftdurchtrittsquerschnitt vorhanden, damit der Ventilkörper zum Beispiel bei nachträglicher Abdeckung des Absaugbereichs kurzfristig in seine Offenstellung zurückkehrt. So wird jeder Absaugbereich der erfindungsgemäßen Vakuumspannplatte, der während eines laufenden Spannvorgangs durch ein Werkstück abgedeckt wird, auch dann, wenn sich ein großflächiges dünnwandiges Werkstück, das nicht von vorn herein komplett eben ist, erst sukzessive an die Platte anlegt, wieder aktiviert. Darum ist das nur teilweise Versperren des Absaugbereichs durch den Ventilkörper vorteilhaft.

Das Luftstrombegrenzungsventil wird zur Begrenzung des Luftstroms nicht aktiv durch einen Aktor oder manuell vom Bediener der Vakuumspannplatte von der Offenstellung in die Geschlossenstellung seines Ventilkörpers geschaltet, sondern passiv durch die über den Ventilkörper abfallende Druckdifferenz, die aus dem nicht durch ein gespanntes Werkstück behinderten Luftstrom resultiert. Wenn der jeweilige Absaugbereich an der Außenseite der Platte durch ein zu spannendes Werkstück luftdicht oder zumindest im Wesentlichen luftdicht abgedeckt ist, wird der Luftstrom durch den Absaugbereich stark behindert, so dass das Luftstrombegrenzungsventil in seiner Offenstellung bleibt oder jedenfalls von der Rückstellkraft in die Offenstellung zurückgeführt wird. Bei nicht abgedecktem Absaugbereich ruft das partielle Vakuum an der Unterseite jedoch einen großen Luftstrom und entsprechend einen großen Druckabfall über den Ventilkörper hervor, der den Ventilkörper in seine Geschlossenstellung überführt. In dieser Geschlossenstellung wird der Ventilkörper dann so lange gehalten, wie der Druckunterschied zwischen dem Umgebungsdruck auf der Oberseite der Platte und dem partiellen Vakuum an der Unterseite der Platte im Wesentlichen über dem Ventilkörper abfällt.

Die Rückstellkraft auf den Ventilkörper wird typischerweise von mindestens einem zwischen der Platte und dem Ventilkörper oder innerhalb des Ventilkörpers wirksamen elastischen Element aufgebracht. Dabei kann das elastische Element ein separates Bauteil oder ein integraler Bestandteil des Ventilkörpers sein. Beispielsweise kann sich der Ventilkörper unter Verformung des elastischen Elements an eine Abdichtfläche des Luftstrombegrenzungsventils anlegen, oder der Ventilkörper kann eine Luftdurchtrittsöffnung aufweisen, die sich unter elastischer Deformation des Ventilkörpers verschließt.

Anders gesagt kann der Ventilkörper in der Offenstellung und der Geschlossenstellung unterschiedliche Positionen in der Platte und/oder unterschiedliche Verformungszustände aufweisen.

Damit aus dem Luftstrom, wenn dieser nicht durch Abdecken des Absaugbereichs behindert ist, die zum Schalten des Ventilkörpers in seine Geschlossenstellung notwendige Druckdifferenz resultiert, ist in dem Absaugbereich eine Drossel für den Luftstrom auszubilden, die bei Durchströmung mit dem Luftstrom die Druckdifferenz hervorruft. Diese Drossel wird im einfachsten und bevorzugten Fall zwischen dem Ventilkörper und dem Rest des Luftstrombegrenzungsventils oder in dem Ventilkörper ausgebildet. Die Verengung dieser Drossel bestimmt die Druckdifferenz, die über dem Ventilkörper abfällt, und diese Druckdifferenz bestimmt zusammen mit der effektiven Fläche des Ventilkörpers die Kraft, mit der der Ventilkörper in Richtung seiner Geschlossenstellung beaufschlagt wird und die auf die in Gegenrichtung wirkende Rückstellkraft abzustimmen ist.

Bei der erfindungsgemäßen Vakuumspannplatte blockiert der Ventilkörper einen Luftdurchtrittsquerschnitt des Absaugbereichs, den er in seiner Offenstellung belässt, in seiner Geschlossenstellung in der Regel zu mindestens 50 %, vorzugsweise zu mindestens 75 % und noch mehr bevorzugt zu mindestens 90%. Damit der Ventilkörper zum Beispiel bei nachträglicher Abdeckung des Absaugbereichs kurzfristig in seine Offenstellung zurückkehrt, ist es bevorzugt, wenn der Ventilkörper in seiner Geschlossenstellung den Luftdurchtrittsquerschnitt des Absaugbereichs, den er in seiner Offenstellung belässt, in seiner Geschlossenstellung zu mindestens 1 % oder auch zu mindestens 5 % oder selbst zu mindestens 10 % nicht blockiert.

Vorzugsweise ist der Ventilkörper der erfindungsgemäßen Vakuumspannplatte von deren Außenseite aus entnehmbar in der Platte angeordnet. Der Ventilkörper ist dann auch von der Außenseite her in die Platte einsetzbar. Das Entnehmen des Ventilkörpers kann zu seiner Reinigung oder seinem Austausch gegen einen anderen Ventilkörper mit anderen Eigenschaften erfolgen. Das Einsetzen des Ventilkörpers von der Außenseite der Platte her kann den Zusammenbau der erfindungsgemäßen Vakuumspannplatte erleichtern.

Konkret kann der Ventilkörper eine längs einer Haupterstreckungsebene der Vakuumspannplatte ausgerichtete Verschlussplatte aufweisen, und an dieser Verschlussplatte kann eine Greifwerkzeugangriffskontur ausgebildet sein und beispielsweise nach oben abstehen. Mit Hilfe eines entsprechenden Greifwerkzeugs kann der Ventilkörper über die an seiner Verschlussplatte ausgebildete Greifwerkzeugangriffskontur ergriffen und aus der Platte entnommen beziehungsweise in die Platte eingesetzt werden. Dies kann auch vollautomatisiert geschehen, insbesondere unter Verwendung einer Positioniereinrichtung, die sonst für das Positionieren eines Werkzeugs gegenüber der Vakuumspannplatte verwendet wird.

In einer Ausführungsform der erfindungsgemäßen Vakuumspannplatte weist deren Platte einen Hauptkörper aus luftdurchlässigem Material auf, beispielsweise aus einer mitteldichten Faserplatte (MDF-Platte). Dabei kann der Ventilkörper in einem von der Außenseite aus in den Hauptkörper führenden Stichkanal angeordnet sein und in seiner Geschlossenstellung einen Teil des Grunds des Stichkanals dichtend abdecken, den er in seiner Offenstellung nicht dichtend abdeckt. Dabei kann der Stichkanal an seinem Außenumfang luftdicht oder zumindest im Wesentlichen luftdicht versiegelt sein. Mit dem Stichkanal wird die Luftdurchlässigkeit in dem Absaugbereich gegenüber angrenzenden Bereichen, in denen eine verdichtete Deckschicht an der Außenseite der MDF-Platte vorhanden ist, stark erhöht. Insbesondere bei luftdichter Versiegelung des Außenumfangs des Stichkanals hängt die Luftdurchlässigkeit des Absaugbereichs davon ab, wie viel von dem Grund des Stichkanals freiliegt oder durch den Ventilkörper dichtend abgedeckt wird. Diese Ausführungsform der erfindungsgemäßen Vakuumspannplatte kann besonders kostengünstig mit großen Abmessungen bereitgestellt werden. Dabei kann die MDF-Platte an ihrer Außenseite in den Bereichen neben den Absaugbereichen so geschliffen belassen werden, wie sie üblicherweise geliefert wird, oder sie kann zusätzlich geglättet und/oder materialabnehmend geebnet werden, beispielsweise durch Polieren, Feinschleifen, Abfräsen und dergleichen. Alternativ oder zusätzlich kann die MDF-Platte an ihrer Außenseite in den Bereichen neben den Absaugbereichen lackiert oder anderweitig beschichtet oder versiegelt werden, um ihre Luftdurchlässigkeit in diesen Bereichen gegen null zu reduzieren.

In einer alternativen Ausführungsform der erfindungsgemäßen Vakuumspannplatte ist der Ventilkörper in einem Kanal angeordnet, der in dem Absaugbereich von der Außenseite auf die Innenseite der Platte führt. Dabei kann der Kanal eine Stufe aufweisen, an der der Ventilkörper zumindest in seiner Geschlossenstellung mit mindestens einer Dichtfläche dichtend anliegen. Vorzugsweise liegt der Ventilkörper in seiner Geschlossenstellung mit mindestens einer Dichtfläche an der Stufe dichtend an, mit der er in seiner Offenstellung nicht an der Stufe anliegt.

Weiterhin kann der Ventilkörper einen nach unten abstehenden Führungsschaft aufweisen, der unter Verbleib von freiem Kanalquerschnitt in den Kanal geführt ist. Der freie Kanalquerschnitt kann aus Spiel zwischen dem Außendurchmesser des Führungsschafts und dem Innendurchmesser des Kanals und/oder einen nicht massiven Querschnitt des Führungsschafts resultieren. Ein nach unten zentral abstehender Führungsschaft ist für eine automatisierte Ausrichtung des Ventilkörpers nutzbar, um sein automatisiertes Einsetzen in die Platte zu unterstützen.

Als vorteilhaft erweist es sich, wenn der Ventilkörper der erfindungsgemäßen Vakuumspannplatte in deren Platte verankert ist. So wird er beispielsweise nicht versehentlich eingesaugt, wenn die Platte an ihrer Oberseite abgesaugt wird, um Materialabtrag von einem bearbeiteten Werkstück oder dergleichen zu entfernen. Konkret kann der Ventilkörper mit einem in radialer Richtung elastisch abgestützten Ankerelement einen Rücksprung in dem Absaugbereich hinter greifen. Der Ventilkörper kann dann unter Überwindung der elastischen Haltekraft des Ankerelements trotz seiner Verankerung aus der Platte entnommen werden.

Eine Querschnittsfläche des Ventilkörpers, über die die Druckdifferenz wirksam ist, ist regelmäßig mindestens 5 mm² groß. Sie kann auch mindestens 10 mm² groß sein, was bei einer kreisförmigen Querschnittsfläche einem Durchmesser der Querschnittsfläche von etwas über 3,5 mm entspricht und damit einem immer noch sehr kompakten Ventilkörper. Typischerweise ist die Querschnittfläche nicht größer als 100 cm² und meistens nicht größer als 10 cm². Dies bedeutet bei einer kreisrunden Querschnittsfläche einen Durchmesser von maximal etwa 11 cm beziehungsweise 3,5 cm. Die Querschnittsfläche des Ventilkörpers kann auch eine andere Form als die eines Kreises haben und beispielsweise elliptisch, quadratisch, rechteckig, streifenförmig oder sternförmig sein. Beispielsweise eine rechteckige oder streifenförmige Querschnittsfläche kann dabei auch größer als 100 cm² sein. Zu beachten ist aber, dass die genannten Querschnittsflächen in der Regel Flächen an der Oberseite der Platte entsprechen, über die ein Werkstück beim Spannen mit der erfindungsgemäßen Vakuumspannplatte nicht durch die Platte abgestützt ist. Je nach Verwendung der Vakuumspannplatte können aber auch Flächen von 100 cm², über die keine Abstützung der Werkstücke erfolgt, unproblematisch sein.

Vorzugsweise ist in oder über dem Absaugbereich, luftstromauf des Luftstrombegrenzungsventils ein Partikelfilter angeordnet, das dazu ausgebildet ist, Partikel von dem Luftstrom durch den Absaugbereich abzufiltern. Bei den abzufilternden Partikeln geht es insbesondere um Material, das beim Bearbeiten des jeweiligen Werkstücks abgenommen wird. Solche Partikel sollten nicht in das Luftstrombegrenzungsventil eintreten, um dessen Funktion nicht zu beeinträchtigen und um das Luftstrombegrenzungsventil nicht zu beschädigen. Das jeweilige Partikelfilter kann in einen das Luftstrombegrenzungsventil aufnehmenden und/oder ausbildenden Kanal von der Oberseite der Platte her eingesetzt sein. Vorzugsweise ist das Partikelfilter jedoch Teil eines die Absaugbereiche der Vakuumspannplatte überspannenden Abschnitts eines begrenzt luftdurchlässigen Bahnenmaterials. Dieses Bahnenmaterial kann auf der Platte fixiert sein, beispielsweise durch Adhäsion, die mit Hilfe eines Adhäsionsmittels oder Klebstoffs hervorgerufen wird. Das Bahnenmaterial dient bei der Vakuumspannplatte nicht nur als Partikelfilter, sondern auch zur lateralen Ausweitung der Bereiche, in denen sich über den Absaugbereichen ein spannender Unterdruck an der Unterseite eines aufliegenden Werkstücks ausbildet, und zum Schutz der Platte vor Beschädigungen durch ein Werkzeug, mit dem das Werkstück durchstechend bearbeitet wird.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Kanal die Rede ist, der in dem Absaugbereich durch die Platte führt, ist dies so zu verstehen, dass dort genau ein Kanal, zwei Kanäle oder mehr Kanäle vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt einen schematischen Vertikalschnitt durch eine erfindungsgemäße Vakuumspannplatte.
- **Fig. 2**: ist eine Ansicht von oben auf die Vakuumspannplatte gemäß Fig. 1.
- **Fig. 3**: ist ein Vertikalschnitt durch einen Absaugbereich einer erfindungsgemäßen Vakuumspannplatte in einer ersten Ausführungsform.
- **Fig. 4**: ist ein Vertikalschnitt durch einen Absaugbereich einer erfindungsgemäßen Vakuumspannplatte in einer zweiten Ausführungsform.
- **Fig. 5**: ist ein Vertikalschnitt durch einen Absaugbereich einer erfindungsgemäßen Vakuumspannplatte in einer dritten Ausführungsform.
- **Fig. 6**: ist ein Vertikalschnitt durch einen Absaugbereich einer erfindungsgemäßen Vakuumspannplatte in einer vierten Ausführungsform.
- **Fig. 7**: ist ein Vertikalschnitt durch einen Absaugbereich einer erfindungsgemäßen Vakuumspannplatte in einer fünften Ausführungsform.
- **Fig. 8**: ist eine Ansicht von oben auf den Absaugbereich gemäß Fig. 7; und
- **Fig. 9**: ist ein Vertikalschnitt durch einen Absaugbereich einer erfindungsgemäßen Vakuumspannplatte in einer sechsten Ausführungsform.

### FIGURENBESCHREIBUNG

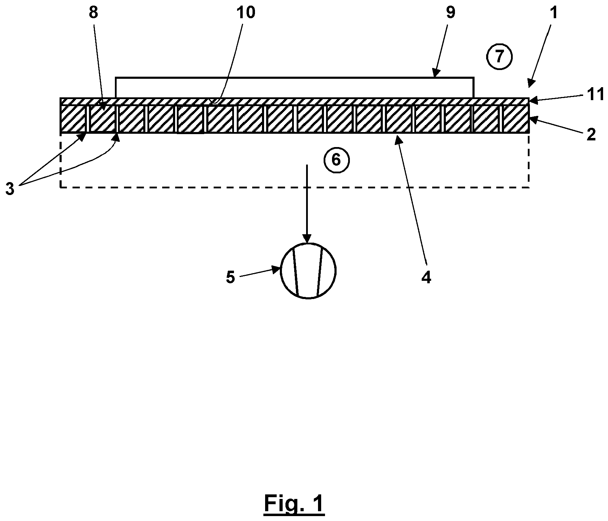

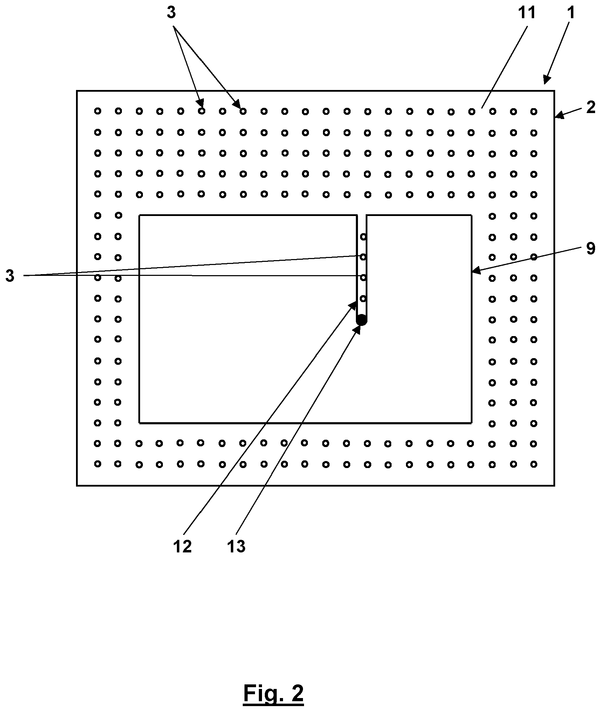

Die in den **Fig. 1** **und** **2** schematisch dargestellte Vakuumspannplatte 1 weist eine starre Platte 2 mit einer Vielzahl von Absaugbereichen 3 auf, die hier in der Horizontalen gemäß Fig. 2 in einem quadratischen Raster angeordnet sind. Die Absaugbereiche 3 sind jeweils so ausgebildet, dass ein auf einer Innenseite 4 der Platte 2 mit Hilfe einer Vakuumpumpe 5 ausgebildetes partielles Vakuum 6 in der Lage ist, Luft 7 von einer Außenseite 8 der Platte 2 anzusaugen. Dabei bildet sich in dem jeweiligen Absaugbereich 3 ein Luftstrom durch die Platte 2 aus, der mit Hilfe eines in den Fig. 1 und 2 nicht dargestellten Luftstrombegrenzungsventils in dem jeweiligen Absaugbereich begrenzt wird. Das Luftstrombegrenzungsventil stellt sicher, dass die Luftströme durch die Absaugbereiche 3, die nicht durch ein Werkstück 9 zumindest im Wesentlichen luftdicht abgedeckt werden, soweit begrenzt werden, dass sie kein Zusammenbrechen des partiellen Vakuums 6 auf der Innenseite 4 der Platte 2 zur Folge haben. Dort wo die Absaugbereiche 3 durch das Werkstück 9 abgedeckt werden, begrenzt das Werkstück 9 den Luftstrom durch den jeweiligen Absaugbereich 3. So bleibt das entsprechende Luftstrombegrenzungsventil offen, und das partielle Vakuum 6 breitet sich bis hin an die Unterseite 10 des Werkstücks 9 aus. Der an der Unterseite 10 resultierende Unterdruck spannt das Werkstück 9 auf die Platte 2. Dabei ist auf der Platte 2 und damit zwischen der Platte 2 und den Werkstück 9 ein Bahnenmaterial 11 angeordnet, das begrenzt luftdurchlässig ist und verschiedene Funktionen erfüllt. Das begrenzt luftdurchlässige Bahnenmaterial 11 erweitert in lateraler Richtung die Bereiche, in denen sich über den Absaugbereichen 3 in der Platte 2 der Unterdruck an der Unterseite des Werkstücks 9 ausbildet, der das Werkstück 9 auf die Platte 2 spannt. Die Fläche dieser Bereiche des Unterdrucks ist proportional zu der Kraft, mit der das Werkstück 9 auf die Platte 2 gespannt wird. Darüber hinaus verhindert das begrenzt luftdurchlässige Material 11 im Sinne eines Partikelfilters, welches Partikel von den Luftströmen durch die Platte 2 abfiltert, dass Material, welches von dem Werkstück 9 abgenommen wird, in die Absaugbereiche 3 und die darin angeordneten Luftstrombegrenzungsventile eintritt. Letztlich dient das Bahnenmaterial 11 als Schutz der Platte 2 beim Bearbeiten des Werkstücks 9 mit einem durch das Werkstück 9 hindurch stechenden Werkzeug. Das Bahnenmaterial 11 ist mit einem hier nicht separat dargestellten Adhäsionsmittel oder Klebstoff auf der Außenseite 8 der Platte 2 fixiert. Das Adhäsionsmittel oder der Klebstoff kann auch die Fixierung des Werkstücks 9 auf dem Bahnenmaterial 11 fördern. In Fig. 2, in der nur einige der Absaugbereiche 3 exemplarisch eingezeichnet sind, ist ein oberhalb von Absaugbereichen 3 in das plattenförmige Werkstück 9 führender Fräskanal 12 eingezeichnet, der mit einem rotierenden Fräser 13 eingebracht wurde. Sobald ein Absaugbereich 3 durch die fortschreitende Bewegung des Fräsers 13 und die resultierende Verlängerung des Fräskanals 12 freigelegt wird, wächst der Luftstrom durch den jeweiligen Absaugbereich 3 stark an. Dies hat zur Folge, dass das in den jeweiligen Absaugbereich 3 angeordnete Luftstrombegrenzungsventil den Luftstrom begrenzt und so den Zusammenbruch des partiellen Vakuums 6 an der Innenseite 4 der Platte 2 verhindert.

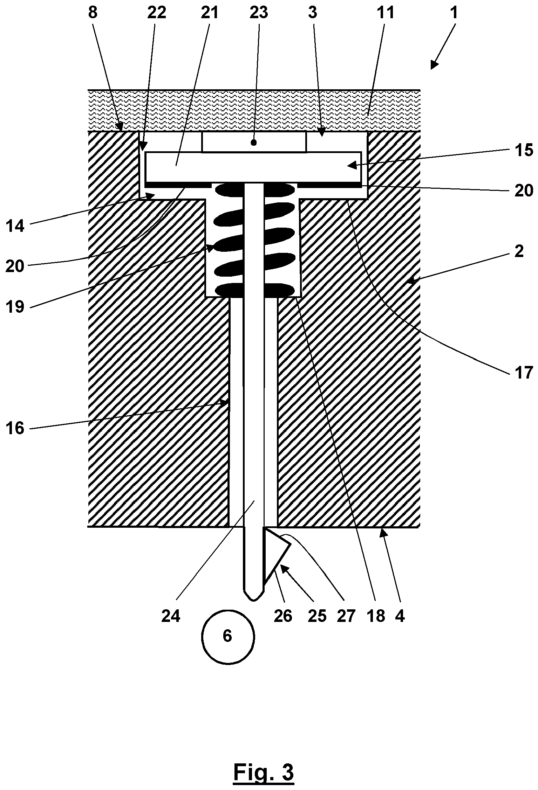

**Fig. 3** zeigt eine Ausführungsform eines in einem der Absaugbereiche 3 in einer massiven Platte 2 ausgebildeten Absaugbereichs 3 mit Luftstrombegrenzungsventil 14. Das Luftstrombegrenzungsventil 14 weist einen Ventilkörper 15 auf, der in einem Kanal 16 angeordnet ist. Der Kanal 16 führt von der Außenseite 8 auf die Innenseite 4 der Platte 2 und weist zwei Stufen 17 und 18 auf. Die Stufe 17 bildet einen Ventilsitz für den Ventilkörper 15 aus. An der Stufe 18 stützt sich eine Druckfeder 19 ab. Die Druckfeder 19 beaufschlagt den Ventilkörper 15 in seine dargestellte Offenstellung, in der der Ventilkörper 15 mit seinen Dichtflächen 20 nicht an dem durch die Stufe 17 gebildeten Ventilsitz anliegt, sondern einen Luftdurchtrittsquerschnitt in dem Absaugbereich 3 belässt. Der Ventilkörper 15 weist eine Verschlussplatte 21 auf, an deren Außenumfang der Luftdurchtrittsquerschnitt durch den Absaugbereich 3 am kleinsten ist, so dass eine Drossel 22 ausgebildet ist. Über dieser Drossel fällt infolge eines Luftstroms durch den Absaugbereich 3 eine Druckdifferenz an, die die Verschlussplatte 21 in Richtung auf die von der Stufe 17 gebildeten Ventilsitz beaufschlagt, so dass der Ventilkörper 15 in eine Geschlossenstellung überführt wird. In dieser Geschlossenstellung liegt der Ventilkörper 15 mit seinen Dichtflächen 20 an dem durch die Stufe 17 gebildeten Ventilsitz an und verschließt so den wesentlichen, aber nicht den vollständigen Luftdurchtrittsquerschnitt des Absaugbereichs 3. Der in der Geschlossenstellung des Luftstrombegrenzungsventils 14 verbleibende Luftdurchtrittsquerschnitt hat zur Folge, dass das Luftstrombegrenzungsventil 14 automatisch wieder öffnet, wenn der Absaugbereich 3 von einem Werkstück abgedeckt wird. Dann wirkt sich das partielle Vakuum 6 an der Innenseite 4 der Platte 2 über den verbleibenden Luftdurchtrittsquerschnitt des Absaugbereichs 3 bis auf die Oberseite der Verschlussplatte 21 aus, und die Druckdifferenz über die Verschlussplatte 21 geht zurück, bis die Druckfeder 19 den Ventilkörper 15 in seine dargestellte Offenstellung zurück führen kann. An der Oberseite der Verschlussplatte 21 ist eine Greifwerkzeugangriffskontur 23 ausgebildet, über die ein Greifwerkzeug den Ventilkörper 15 erfassen kann, um ihn in den Kanal 16 einzusetzen. Von der Unterseite der Verschlussplatte 21 steht ein Führungsschaft 24 ab, der sich durch den Kanal 16 bis über die Innenseite 4 der Platte 2 hinaus erstreckt und dort die Platte 2 mit einem elastisch abgestützten Ankerelement 25 hintergreift. Das Ankerelement 25 weist zwei Schrägen 26 und 27 auf, mit deren Hilfe das Ankerelement 25 beim Einsetzen in den Kanal 16 in den Führungsschaft 24 eindrückbar und beim Wiederherausziehen aus dem Kanal 16 in den Führungsschaft 24 zurückdrückbar ist. Die hier von der Verschlussplatte 21 nach oben abstehende Greifwerkzeugangriffskontur 23 führt zudem dazu, dass auch dann, wenn das Bahnenmaterial 11 nicht auf der Platte 2 liegt, die Verschlussplatte 21 niemals vollflächig an der Unterseite eines Werkstücks 9 anliegt. Eine solche vollflächige Anlage kann ein schnelles Ansprechen des Luftstrombegrenzungsventils 14 behindern, wenn der Absaugbereich 3 partiell von dem Fräskanal 12 freigelegt wird, weil sich dann die über der Drossel 22 ausbildende Druckdifferenz nicht sofort über die gesamte Fläche der Verschlussplatte 21 auswirkt.

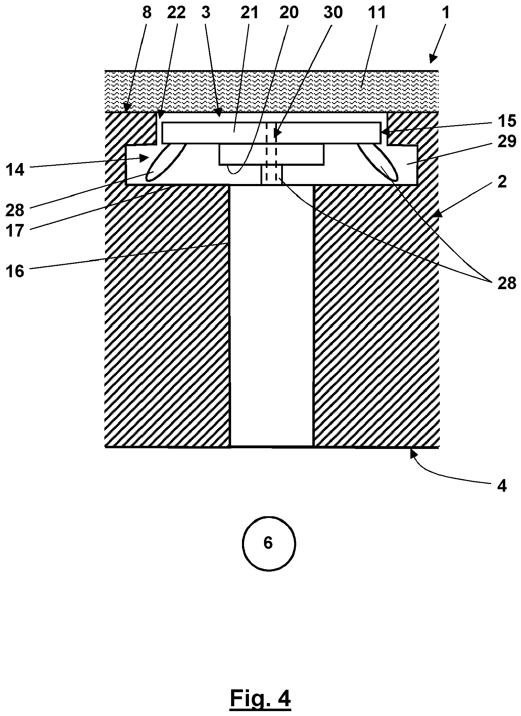

Bei der Ausführungsform des Absaugbereichs 3 gemäß **Fig. 4** ist der Ventilkörper an der Stufe 17 des Kanals 16 über Federbeine 28 elastisch abgestützt. Die Federbeine 28 greifen zugleich in eine ringförmige Hinterschneidung 29 im Außenumfang des Kanals 16 ein und halten den Ventilkörper 15 damit in dem Kanal 16. Die Drossel 22 ist auch hier am Außenumfang der Verschlussplatte 21 ausgebildet. Die Dichtfläche 20 des Ventilkörpers 15 läuft um und liegt umlaufend an dem durch die Stufe 17 ausgebildeten Ventilsitz an. In dem Ventilkörper 15 ist jedoch ein Bypasskanal 30 ausgebildet, der einen Luftdurchtrittsquerschnitt definiert, der auch in der Geschlossenstellung des Ventilkörpers 15 in dem Absaugbereich 3 verbleibt. Der Bypasskanal 30 in Form einer zentralen Bohrung durch den Ventilkörper 15 kann auch für den Angriff eines Halbwergzeugs genutzt werden. Eine Greifwerkzeugangriffskontur 23 weist der Ventilkörper 15 hier nicht auf.

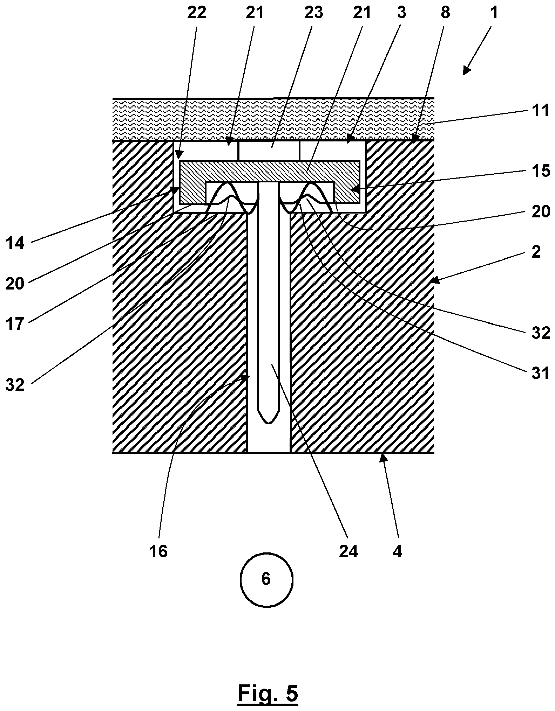

Bei der Ausführungsform gemäß **Fig. 5** ist wieder eine Greifwerkzeugangriffskontur 23 vorgesehen. Hier weist der Kanal 16 wie in Fig. 4 nur eine Stufe auf, an der sich auch ein elastischer Wellenring 31 abstützt, der den Ventilkörper 15 in seine dargestellte Offenstellung beaufschlagt und der aus Kunststoff ausgebildet sein kann. Die Dichtflächen 20 des Ventilkörpers 15 sind hier nicht umlaufend, sondern weisen Unterbrechungen 32 auf, um einen kleinen Luftdurchtrittsquerschnitt des Absaugbereichs 3 in der Geschlossenstellung des Ventilkörpers 15zu belassen.

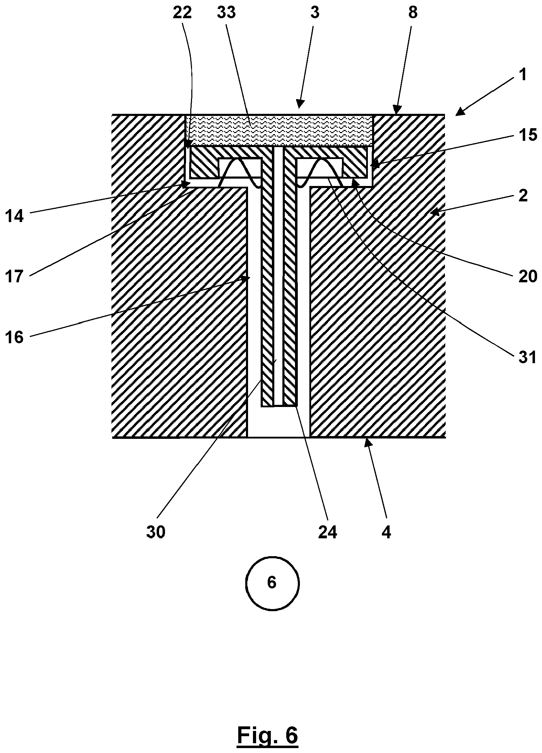

Bei der Ausführungsform gemäß **Fig. 6** sind folgende Abweichungen von der Ausführungsform gemäß Fig. 5 zu sehen. Statt des durchgehenden Bahnenmaterials 11 ist ein Partikelfilter 33 stromauf des Luftstrombegrenzungsventils 14 in den Kanal 16 eingesetzt. Statt der Unterbrechungen 32 der Dichtfläche 20 ist führt wie in Fig. 4 ein Bypasskanal 30 durch den Ventilkörper 15, hier auch durch den Führungsschaft 24.

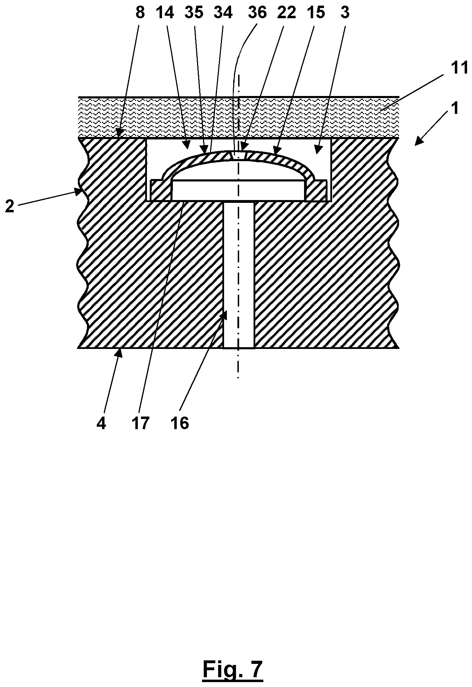

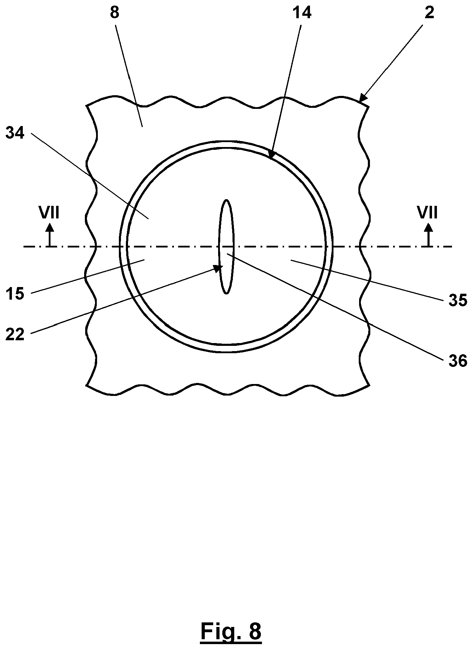

Die Ausführungsform des Absaugbereichs 3, die in den **Fig. 7** und **8** dargestellt ist, wobei in Fig. 8 das Bahnenmaterial 11 auf der Oberfläche 8 der Platte 2 weggelassen ist, um den Blick auf das Luftstrombegrenzungsventil 14 freizugeben, sitzt der Ventilkörper 15 auf der Stufe 17 des Kanals 16 auf und ist aus einem elastischen Material 34 ausgebildet. Dieses elastische Material 34 bildet eine Kuppel 35 mit einer zentralen Öffnung 36 aus. Die zentrale Öffnung 36 wirkt als die Drossel 22. Wenn über der Drossel 22 eine Druckdifferenz abfällt, drückt diese Druckdifferenz die Kuppel 35 ein und verschließt so die Öffnung 36 bis auf den gewünschten kleinen Rest des Luftdurchtrittsquerschnitts des Absaugbereichs 3.

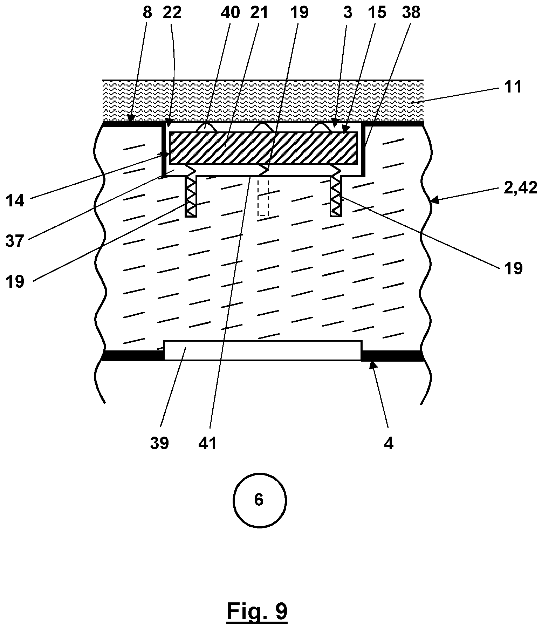

Bei der Ausführungsform des Luftabsaugbereichs 3 gemäß **Fig. 9** ist die Platte 2 nicht massiv, sondern eine grundsätzlich luftdurchlässige Faserplatte 42, beispielsweise eine MDF-Platte. In ihren Deckschichten an der Innenseite 4 und der Außenseite 8 ist die Faserplatte 42 weniger luftdurchlässig als in ihrer Mittelschicht. In dem Luftabsaugbereich 13 führt ein Stichkanal 37 von der Außenseite 8 in die Platte 2, der an seinem Außenumfang mit einer zumindest im Wesentlichen luftdichten Versiegelung 38 versehen ist. Gegenüber, an der Innenseite 4 ist die Deckschicht im Bereich eines weiteren Stichkanals 39 ebenfalls partiell entfernt. In dem Stichkanal 37 ist der Ventilkörper 15 angeordnet, der hier im Wesentlichen aus der Verschlussplatte 21 besteht, die an ihrer Oberseite Vorsprünge 40 aufweist und sich an ihrer Unterseite über Druckfedern 19 an der Platte abstützt. Wenn die Druckdifferenz über der Drossel 22, die hier zwischen der Verschlussplatte 21 und der Versiegelung 38 ausgebildet ist, aufgrund einer größeren Luftströmung durch den Absaugbereich 3 so groß ist, dass die Druckfedern 19 zusammen gedrückt werden, legt sich die Verschlussplatte 21 an den Grund 41 des Stichkanals 37 an und blockiert so einen wesentlichen Teil des Luftdurchtrittsquerschnitts des Absaugbereichs 3. Sobald sich jedoch das partielle Vakuum 6 an der Innenseite 4 der Platte 2 über den verbleibenden Luftdurchtrittsquerschnitt bis auf die Oberseite der Verschlussplatte 21 auswirken kann, kehrt der Ventilkörper 15 aus seiner Geschlossenstellung in die in Fig. 9 gezeigte Offenstellung zurück.

### BEZUGSZEICHENLISTE

- 1: Vakuumspannplatte
- 2: Platte
- 3: Absaugbereich
- 4: Innenseite
- 5: Vakuumpumpe
- 6: partielles Vakuum
- 7: Luft
- 8: Außenseite
- 9: Werkstück
- 10: Unterseite
- 11: Bahnenmaterial
- 12: Fräskanal
- 13: Fräser
- 14: Luftstrombegrenzungsventil
- 15: Ventilkörper
- 16: Kanal
- 17: Stufe
- 18: Stufe
- 19: Druckfeder
- 20: Dichtfläche
- 21: Verschlussplatte
- 22: Drossel
- 23: Greifwerkzeugangriffskontur
- 24: Führungsschaft
- 25: Ankerelement
- 26: Schräge
- 27: Schräge
- 28: Federbein
- 29: Hinterschneidung
- 30: Bypasskanal
- 31: Wellenring
- 32: Öffnung
- 33: Partikelfilter
- 34: elastisches Material
- 35: Kuppel
- 36: Öffnung
- 37: Stichkanal
- 38: Versiegelung
- 39: Stichkanal
- 40: Vorsprung
- 41: Grund
- 42: Faserplatte

## Patentansprüche

1. Vakuumspannplatte (1) mit
- einer Platte (2), in der mehrere nebeneinander angeordnete Absaugbereichen (3) jeweils derart ausgebildet sind, dass ein auf einer Innenseite (4) der Platte (2) ausgebildetes partielles Vakuum (6) in der Lage ist, Luft (7) von einer Außenseite (8) der Platte (2) anzusaugen, wobei sich in dem jeweiligen Absaugbereich (3) ein Luftstrom durch die Platte (2) ausbildet, und
- mit einem Luftstrombegrenzungsventil (14) zur Begrenzung des Luftstroms in mindestens einem der Absaugbereiche (3), und
- wobei das Luftstrombegrenzungsventil (14) einen Ventilkörper (15) aufweist, der von einer Rückstellkraft in eine Offenstellung beaufschlagt wird und der derart ausgebildet und angeordnet ist, dass er durch eine über ihm abfallende Druckdifferenz in eine Geschlossenstellung überführt wird, wobei die Druckdifferenz aus dem Luftstrom resultiert, wenn dieser nicht durch Abdecken des Absaugbereichs (3) an der Außenseite (8) der Platte (2) behindert ist,
**dadurch gekennzeichnet, dass** der Ventilkörper (15) den Luftdurchtrittsquerschnitt des Absaugbereichs (3), den er in seiner Offenstellung belässt, in seiner Geschlossenstellung teilweise, jedoch nicht vollständig blockiert, damit der Ventilkörper (15) bei nachträglicher Abdeckung des Absaugbereichs (3) in seine Offenstellung zurückkehrt.

2. Vakuumspannplatte (1) nach Anspruch 1, **wobei** der Ventilkörper (15) den Luftdurchtrittsquerschnitt des Absaugbereichs (3), den er in seiner Offenstellung belässt, in seiner Geschlossenstellung zu mindestens 1 %, 5 % oder 10 % nicht blockiert.

3. Vakuumspannplatte (1) nach einem der vorhergehenden Ansprüche, **wobei** der Ventilkörper (15) den Luftdurchtrittsquerschnitt des Absaugbereichs (3), den er in seiner Offenstellung belässt, in seiner Geschlossenstellung zu mindestens 50 %, 75 % oder 90 % blockiert.

4. Vakuumspannplatte (1) nach einem der vorhergehenden Ansprüche, **wobei** die Rückstellkraft von mindestens einem zwischen der Platte (2) und dem Ventilkörper (15) oder innerhalb des Ventilkörpers (15) wirksamen elastischen Element aufgebracht wird, das ein separates Bauteil oder ein integraler Bestandteil des Ventilkörpers (15) ist.

5. Vakuumspannplatte (1) nach einem der vorhergehenden Ansprüche, **wobei** der Ventilkörper (15) in der Offenstellung und der Geschlossenstellung unterschiedliche Positionen in der Platte (2) und/oder unterschiedliche Verformungszustände aufweist.

6. Vakuumspannplatte (1) nach einem der vorhergehenden Ansprüche, **wobei** in dem Absaugbereich eine Drossel (22) für den Luftstrom ausgebildet ist, die bei Durchströmung mit dem Luftstrom die Druckdifferenz hervorruft.

7. Vakuumspannplatte (1) nach einem der vorhergehenden Ansprüche, **wobei** der Ventilkörper (15) von der Außenseite (8) aus entnehmbar in der Platte (2) angeordnet ist.

8. Vakuumspannplatte (1) nach einem der vorhergehenden Ansprüche, **wobei** der Ventilkörper (15) eine längs einer Haupterstreckungsebene der Platte (2) ausgerichtete Verschlussplatte (21) aufweist, wobei der Ventilkörper (15) optional eine an der Verschlussplatte (21) ausgebildete Greifwerkzeugangriffsvorsprung (23) aufweist.

9. Vakuumspannplatte (1) nach einem der vorhergehenden Ansprüche, **wobei** die Platte (2) luftdurchlässig ist, wobei der Ventilkörper (15) in einem von der Außenseite (8) aus in die Platte (2) führenden Stichkanal (37) angeordnet ist und in seiner Geschlossenstellung zumindest einen Teil des Grunds (41) des Stichkanals (37) dichtend abdeckt, den er in seiner Offenstellung nicht dichtend abdeckt.

10. Vakuumspannplatte (1) nach einem der Ansprüche 1 bis 8, **wobei** der Ventilkörper (15) in einem Kanal (16) angeordnet ist, der in dem Absaugbereich (3) von der Außenseite (8) auf die Innenseite (4) der Platte (2) führt, **wobei** der Kanal (16) optional eine Stufe (17) aufweist, an der der Ventilkörper (15) in seiner Geschlossenstellung mit mindestes einer Dichtfläche (20) dichtend anliegt, mit der er in seiner Offenstellung nicht an der Stufe (17) anliegt.

11. Vakuumspannplatte (1) nach Anspruch 10, **wobei** der Ventilkörper (15) einen nach unten abstehenden Führungsschaft (24) aufweist, der unter Verbleib von freiem Kanalquerschnitt in dem Kanal (16) geführt ist.

12. Vakuumspannplatte (1) nach einem der vorhergehenden Ansprüche, **wobei** der Ventilkörper (15) in der Platte (2) verankert ist, **wobei** der Ventilkörper (15) optional mit einem in radialer Richtung elastisch abgestützten Ankerelement (25) einen Rücksprung in dem Absaugbereich hintergreift.

13. Vakuumspannplatte (1) nach einem der vorhergehenden Ansprüche, **wobei** der Ventilkörper (15) eine Querschnittsfläche, über die die Druckdifferenz wirksam ist, von mindestens 5 mm² oder mindestens 10 mm² und von höchstens 100 cm² oder höchstens 10 cm² aufweist.

14. Vakuumspannplatte (1) nach einem der vorhergehenden Ansprüche, **wobei** in oder über dem Absaugbereich, luftstromauf des Luftstrombegrenzungsventils (14) ein Partikelfilter (33) angeordnet ist, das dazu ausgebildet ist, Partikel von dem Luftstrom abzufiltern.

15. Vakuumspannplatte (1) nach Anspruch 14, **wobei** das Partikelfilter (33) Teil eines die Absaugbereiche der Vakuumspannplatte (1) überspannenden Abschnitts eines begrenzt luftdurchlässigen Bahnenmaterials (11) ist, das auf der Platte (2) fixiert ist, optional durch Adhäsion.
